# EUROPÄISCHE PATENTSCHRIFT

(11) **EP 0 463 275 B1**
(45) Veröffentlichungstag und Bekanntmachung des Hinweises auf die Patenterteilung: **02.02.1994**
(21) Anmeldenummer: 90810477.1
(22) Anmeldetag: 25.06.1990
(51) Int. Cl.: F16G 15/02

(54) **Bausatz für die Befestigung und/oder Herstellung einer Kette**
Set of elements for fixing and/or manufacturing a chain
Ensemble d'éléments par la fixation et/ou la fabrication d'une chaîne

(43) Veröffentlichungstag der Anmeldung: 02.01.1992
(73) Patentinhaber: Scheiwiller, Rolf, CH-6052 Hergiswil (CH)
(72) Erfinder: Scheiwiller, Rolf, CH-6052 Hergiswil (CH)
(74) Vertreter: Seehof, Michel

(56) Entgegenhaltungen:
- WO-A-81/00607
- DE-B- 1 269 428
- GB-A- 224 898
- GB-A- 1 056 282
- US-A- 3 507 112

## Beschreibung

Die vorliegende Erfindung bezieht sich auf einen Bausatz für die Befestigung und/oder Herstellung einer Kette, mit U-förmigen Kettenhalbgliedern, deren Stirnflächen Anschlagflansche aufweisen. Ein Kettenschloss mit solchen Kettenhalbgliedern ist aus der DE-B-1 269 428 bekannt. Dabei greifen die Anschlagflansche, die paarweise gegeneinander liegen, in entsprechend geformte Durchbrüche von Halteplatten derart, dass die Flanschoberseiten mit den Oberflächen der Halteplatten abschliessen. Dieses Kettenschloss, respektive diese Kettenhalbglieder sind in erster Linie gedacht, dass Anreissen der Kettengliedflansche bei Kettenschlössern zu verhindern, und es wurde dabei vor allem auch Wert darauf gelegt, dass das Kettenschloss Aussenabmessungen aufweist, die im wesentlichen den Aussenabmessungen eines normalen Kettengliedes entsprechen.

Bei Ketten, die keine grossen Kräfte übertragen müssen, d. h. vor allem bei Zierketten, spielt das Anreissen keine wesentliche Rolle und der ästhetische Aspekt steht mehr im Vordergrund, wobei auch vermehrt auf die Wirtschaftlichkeit bei der Herstellung der Glieder, respektive deren Giessformen geachtet werden kann. Ausserdem stellt sich bei Ketten häufig das Problem einer Befestigung an beispielsweise eine Mauer, an einem Poller oder an bereits bestehende Kettenglieder. Ausserdem stellt sich häufig die Aufgabe bei Zierketten, bei denen der ästhetische Aspekt vorwiegt, einen richtigen Durchhang der Kette zu erzielen sowie ein Verwinden derselben zu vermeiden. Es ist davon ausgehend Aufgabe der vorliegenden Erfindung, einen Bausatz anzugeben, mit welchem es möglich ist, Ketten sowohl herzustellen als auch an Wänden, Pfosten, Geländer oder Ringen zu befestigen, und wobei es möglich sein soll, sowohl den richtigen Durchhang für eine Kette im Falle einer Verwendung als Zierkette zu bestimmen als auch eine Verwindung der einzelnen Glieder zu vermeiden.

Diese Aufgabe wird mit einem in den Ansprüchen definierten Bausatz gelöst. Die Erfindung wird im folgenden anhand einer Zeichnung von Ausführungsbeispielen näher erläutert.
- Fig. 1: zeigt in perspektivischer Sicht ein erfindungsgemässes Kettenhalbglied,
- Fig. 2: zeigt das Kettenhalbglied von Fig. 1 in einem Kreuzstück,
- Fig. 3: zeigt ein zweites Ausführungsbeispiel eines Kreuzstückes als Kettenhalter von unten,
- Fig. 4: zeigt einen Schnitt gemäss der Linie IV-IV in Fig. 3,
- Fig. 5: zeigt eine Ausführungsvariante zu Fig. 4,
- Fig. 6: zeigt ein zusammengesetztes Kettenglied in Draufsicht,
- Fig. 7: zeigt einen Schnitt gemäss der Linie VII-VII in Fig. 6,
- Fig. 8: zeigt einen Schnitt gemäss der Linie VIII-VIII in Fig. 6,
- Fig. 9: zeigt ein Kettenhalbglied mit aufgesetztem Haken,
- Fig. 10: zeigt zwei über ein Wendestück verbundene Kettenhalbglieder,
- Fig. 11: zeigt einen Schnitt von Fig. 10 und
- Fig. 12: zeigt das Wendestück von Fig. 10 in einer Sicht von unten.

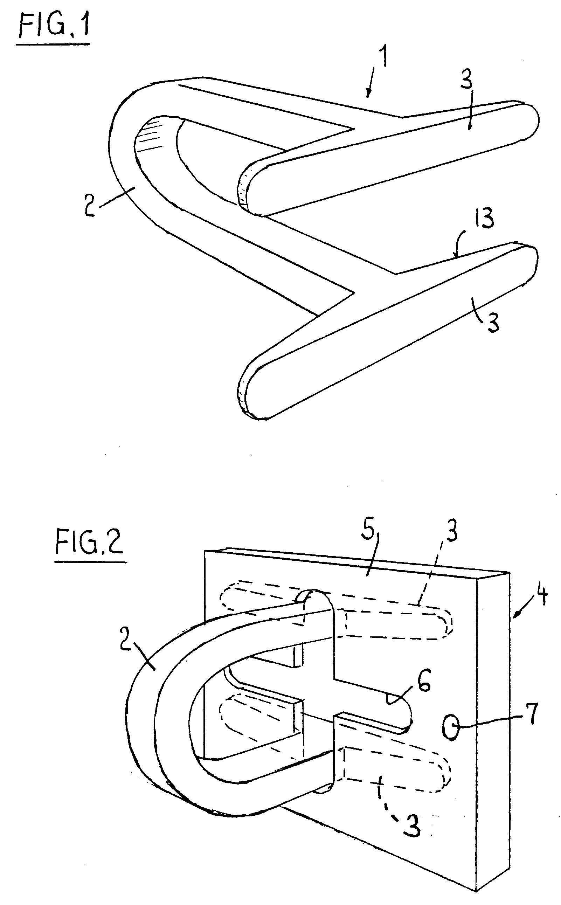

Fig. 1 stellt ein U-förmiges Kettenhalbglied 1 dar, mit dem U-förmigen Bogen 2, der in vorliegendem Beispiel keinerlei Verengung aufweist, und die beiden Anschlagflansche 3, deren Länge insgesamt grösser ist als die doppelte Dicke des Bogens. In vorliegendem Beispiel beträgt die Flanschlänge ein Mehrfaches der Bogendicke. Ein Aspekt der vorliegenden Erfindung besteht darin, diese Kettenhalbglieder auf verschiedene Weise zu verwenden, d. h. sie entweder an eine Wand oder Halter oder dergleichen zu befestigen oder sie miteinander zu einer Gliederkette zu verbinden.

In Fig. 2 ist schematisch und in perspektivischer Sicht dargestellt, wie ein Kettenhalbglied mittels einem Kreuzstück an eine Wand, Pfosten oder dergleichen befestigt werden kann. Das schematisch gezeichnete Kreuzstück 4 besteht aus einer Platte 5, in welcher eine kreuzförmige Ausnehmung 6 und Befestigungslöcher 7 angeordnet sind. Am unteren, in Fig. 2 hinteren Teil der Platte befinden sich Ausnehmungen, die den Anschlagflanschen entsprechen, um das Kettenhalbglied entweder in der Stellung von Fig. 2 oder senkrecht dazu derart einzuführen, dass die Flansche nicht aus der Ebene der Rückseite der Platte hinausragen.

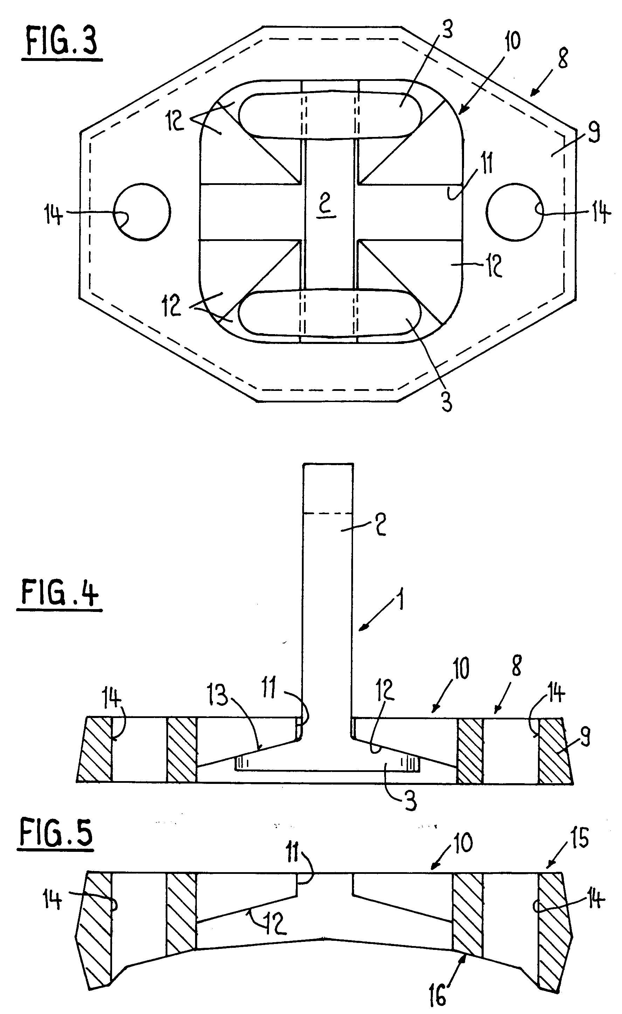

In den Fig. 3 und 4 ist ein konkretes Ausführungsbeispiel eines Kreuzstücks dargestellt. Das Kreuzstück 8 weist eine längliche, achteckige Platte 9 auf, wobei jedoch die äussere Form dieser Platte nicht massgeblich ist und nur eine der vielen möglichen Formen darstellt. In der Mitte der Platte ist ein etwa quadratisches Kreuzteil 10 angeordnet, das die kreuzförmige Ausnehmung 11 enthält. Wie auch aus Fig. 4 hervorgeht, weist das Kreuzteil 10 nicht die gleiche Dicke auf wie die übrige Platte und ist von unten gesehen in vier Segmente unterteilt mit von der Ausnehmung 11 aus gesehen schräg ansteigenden Wänden 12, wobei deren Steigung den nach aussen sich verjüngenden Innenflächen 13 des Anschlagflansches 3 des Kettenhalbgliedes 1 entsprechen, siehe Fig. 4. Die Befestigungsplatte 9 weist ferner zwei Bohrungen 14 auf. Dadurch, dass dieses Befestigungsstück eine kreuzförmige Ausnehmung enthält, kann es an beiden Enden der Kette in gleicher Stellung angebracht werden unabhängig davon, ob das erste bzw. letzte Kettenglied waagrecht oder senkrecht befestigt werden soll. Wie bereits eingangs erwähnt, kann dieses Kreuzstück an Wänden, Pfählen, Pollern und dergleichen befestigt werden.

In Fig. 5 ist als Ausführungsvariante zum Kreuzstück 8 von Fig. 4 ein Kreuzstück 15 dargestellt, in welchem die Bodenfläche 16 nicht eben sondern gekrümmt ist und der Oberfläche angepasst ist, an welcher das Kreuzstück befestigt werden soll.

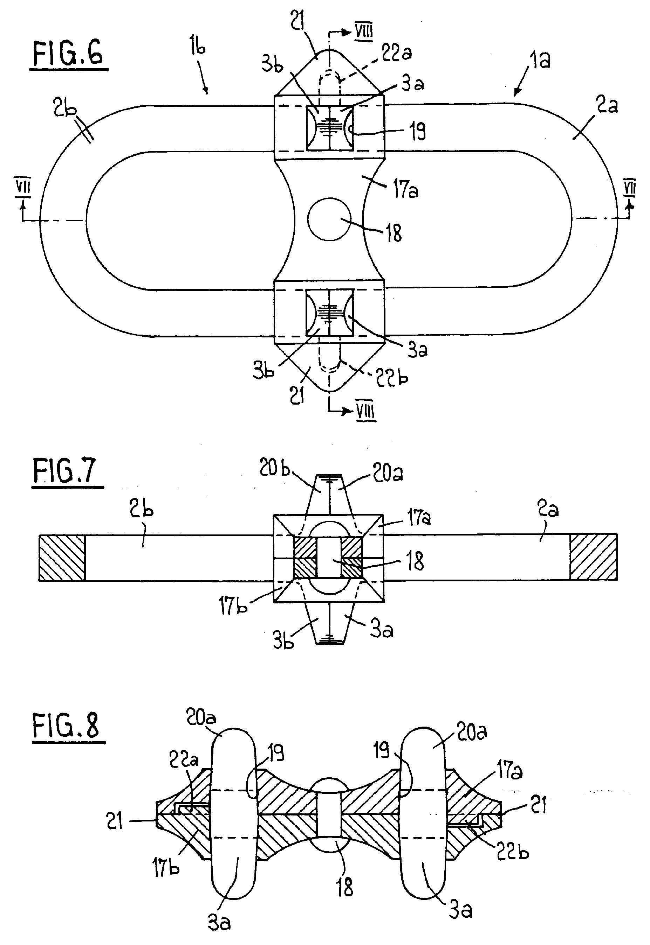

In den Fig. 6 bis 8 ist die Verwendung der Kettenhalbglieder 1 zur Herstellung einer Gliederkette unter Verwendung eines weiteren Teils des Bausatzes dargestellt. Die beiden Kettenhalbglieder 1a, 1b sind untereinander identisch, so dass jeweilen nur ein einziger Kettenhalbgliedertyp hergestellt werden muss. Beide Kettenglieder werden an ihren Anschlagflanschen 3a, 3b mit einem Joch aus zwei identischen Teilen 17a, 17b zusammengehalten, wobei die beiden Jochhälften in diesem gezeichneten Beispiel durch eine Niete 18 miteinander fest verbunden sind. Anstatt einer Niete kann auch eine Schraube verwendet werden, falls die Glieder leicht ausgetauscht werden sollen. Aus den Figuren geht deutlich hervor, dass die Anschlagflansche der beiden Kettenhalbglieder aneinander liegen und die beiden Jochhälften dem Querschnitt der Anschlagflansche angepasste Oeffnungen 19 aufweisen derart, dass die Enden 20a, 20b der Anschlagflansche aus der Ebene des Joches herausragen. Die Enden 21 des Joches sind in diesem Beispiel abgerundet, doch ist es selbstverständlich, dass sie jede ästhetisch befriedigende Form annehmen können.

Die Innenflächen der Jochhälften sind nicht eben ausgebildet sondern weisen je einen Absatz 22a, bzw. 22b auf, um die lateralen Kräfte besser aufzunehmen, wodurch wenig Kraft auf die Niete 18 übertragen wird. Dadurch vermindert sich auch erheblich die Gefahr eines Einreissens des Joches und der Flansche, da die Kräfte an mehreren Stellen verteilt angreifen.

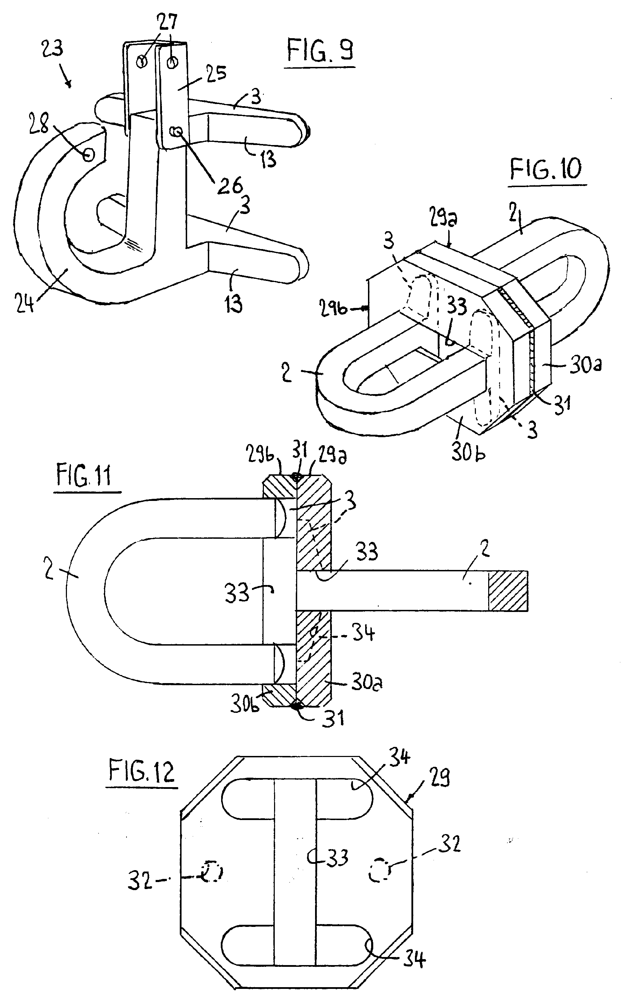

In Fig. 9 ist eine Ausführungsvariante zum Kettenhalbglied 1 dargestellt, in dem dieses Kettenhalbglied 23 dieselben Anschlagflansche 3 aufweist wie das erste jedoch der Bogen 24 nicht vollständig ist und durch einen verriegelbaren Verschluss 25 verschlossen werden kann, wobei das U-förmige Verschlussteil um eine Achse 26 schwenkbar ist und durch die Bohrungen 27 in beiden Schenkeln sowie die Bohrung 28 im Bogen mittels eines Stiftes oder Schraube oder dergleichen verschlossen werden kann. Selbstverständlich kann der Verschluss auch entfallen.

In den Fig. 10 bis 12 ist ein weiteres Element des Bausatzes dargestellt, mit welchem das Kettenhalbglied gemäss Fig. 1 oder eventuell Fig. 9 verbunden werden kann. Bei der Verwendung des Kreuzstückes gemäss den Fig. 2 oder 3 kann das daran befestigte Kettenhalbglied entweder senkrecht oder waagrecht befestigt werden, so dass damit bereits Einfluss auf die Gestaltung der Kette genommen werden kann, während dies beim Verschluss gemäss den Fig. 6 bis 8 nicht möglich ist, denn dort werden die ganzen Kettenglieder jeweils um 90 Grad verdreht aneinander gereiht, respektive in der gleichen Ebene miteinander verbunden. Um eine Drehung um 90 Grad zwischen zwei Kettenhalbgliedern zu ermöglichen, wird anstatt der beiden Joche 17a, 17b ein aus zwei identischen Teilen bestehendes Wendestück 29a, 29b verwendet, dessen Grundplatten 30a, 30b einen quadratischen oder sonstwie symmetrischen Grundriss aufweisen, siehe Fig. 12. Die abgeschrägten Ecken dienen der ästhetischen Formgebung und sind nicht funktionell. Die beiden Wendestückhälften können, wie in dem vorliegenden Beispiel angedeutet, durch eine Schweissnaht 31 oder aber selbstverständlich auch über Schrauben oder ähnliche lösbare Verbindungen miteinander verbunden sein, wie dies durch die Befestigungslöcher 32 in Fig. 12 angedeutet ist. Die Grundplatten weisen eine längliche Oeffnung 33 zum Durchstecken des Bogens des Kettenhalbgliedes sowie zwei um 90 Grad dazu angeordnete Vertiefungen 34 auf, um die Innenflächen 13 der Anschlagflansche der Kettenhalbglieder aufzunehmen.

Diese Wendestücke werden vor allem benötigt, wenn die Kette nicht mit den Kreuzstücken verwendet werden, sondern an schon bestehende Bauwerke zur Anwendung kommen. Wenn aber diese Oesen, Ringe oder Befestigungslöcher die gleiche Lage haben und die zu befestigende Kette eine gerade oder ungerade Gliedzahl aufweist, muss die Kette in sich verdreht werden, so dass diese Wendestücke zur Anwendung kommen. Damit kann der Kettendurchhang optimal eingestellt werden.

Als Material für die Kettenglieder und Befestigungselemente können alle an sich schon bekannte Metalle und Legierungen verwendet werden. Falls es sich vorwiegend um Zierketten handelt, ist es vorteilhaft, Aluminiumguss zu verwenden, wobei die Tatsache, dass sämtliche Teile, d. h. Kettenglieder, Kreuzstücke, Joche und Wendestücke aus jeweils zwei identischen Teilen bestehen, die Herstellung dieser Teile wesentlich erleichtert und grosse Einsparungen bringt.

## Patentansprüche

1. Bausatz für die Befestigung und/oder Herstellung einer Kette, mit U-förmigen Kettenhalbgliedern (1: 1a, 1b: 9), deren Stirnflächen Anschlagflansche (3) aufweisen, dadurch gekennzeichnet, dass die Länge der Anschlagflansche (3) grösser ist als die doppelte Dicke der U-förmigen Bogenteile (2), und der Bausatz ein Kreuzstück (4, 8, 15) mit einer kreuzförmigen Ausnehmung (11) enthält, um das U-förmige Bogenteil (2) des Kettenhalbgliedes wahlweise senkrecht oder waagrecht durchzustecken und das Kettenhalbglied in dieser Stellung zu befestigen.

2. Bausatz nach Anspruch 1, dadurch gekennzeichnet, dass er ferner ein aus zwei gleichen Hälften (17a, 17b) bestehendes Joch enthält, mit je einer Oeffnung (19), um die aneinander liegenden Anschlagflansche (3a, 3b) zweier Kettenhalbglieder (1a, 1b) aufzunehmen und das Joch Mittel aufweist, um die beiden Hälften lösbar oder nicht miteinander zu verbinden.

3. Bausatz nach Anspruch 1 oder 2, dadurch gekennzeichnet, dass er des weiteren ein aus zwei gleichen Teilen (29a, 29b) bestehendes Wendestück mit je einer länglichen Oeffnung (33) enthält, durch welche Oeffnung das U-förmige Bogenteil (2) des Kettenhalbgliedes (1) steckbar ist, wobei die beiden bestückten Wendestückteile wahlweise in der gleichen Bogenteilebene oder vorzugsweise in zwei senkrecht aufeinander stehenden Ebenen miteinander verbindbar sind.

4. Bausatz nach Anspruch 1, dadurch gekennzeichnet, dass das Kreuzstück (8) aus einer Platte (9) besteht, in deren Mittelteil ein symmetrisches Kreuzteil (10) mit der kreuzförmigen Ausnehmung (11) angeordnet ist, wobei das Kreuzteil eine geringere Dicke als die übrige Platte (8) aufweist und von der dem Anschlagflansch (3) zugewandten Seite her gesehen in vier Segmente unterteilt ist mit von der Ausnehmung (11) aus gesehen schräg ansteigenden Wänden (12), deren Steigung der Neigung der gegen aussen sich verjüngenden Innenseiten (13) der Anschlagflansche (3) entspricht.

5. Bausatz nach Anspruch 3, dadurch gekennzeichnet, dass die Wendestückteile (29a, 29b) aus Grundplatten (30a, 30b) mit einem symmetrischen Grundriss bestehen, worin senkrecht zu den länglichen Oeffnungen (33) zwei Vertiefungen angeordnet sind, um die Innenflächen (13) der Anschlagflansche (3) aufzunehmen.

6. Bausatz nach Anspruch 2, dadurch gekennzeichnet, dass die Innenflächen der Jochhälften (17a, 17b) je einen einander entsprechenden Absatz (22a, 22b) aufweisen.

7. Bausatz nach einem der Ansprüche 1 bis 6, dadurch gekennzeichnet, dass das U-förmige Bogenteil (24) nicht geschlossen ist und einen Haken bildet.

8. Bausatz nach Anspruch 7, dadurch gekennzeichnet, dass die Lücke im Bogenteil (24) durch einen Verschluss (25) verschliessbar ist.

9. Bausatz nach einem der Ansprüche 1 bis 8, dadurch gekennzeichnet, dass die Kettenglieder, die Kreuz- und Wendestücke sowie die Joche aus Aluminiumguss hergestellt sind.

## Claims

1. Set of elements for fixing and/or manufacturing a chain, comprising U-shaped chain half-links (1; 1a,1b, 9) whose front faces are provided with stop flanges (3), characterised in that the length of said stop flanges (3) is greater than twice the thickness of said U-shaped curved portions (2), and in that the set of elements comprises a cross piece (4, 8, 15) having a cross-shaped cutout (11) in order to insert said U-shaped curved portion (2) of said chain half-link either in a vertical or in a horizontal position and to secure the chain half-link in said position.

2. Set of elements according to claim 1, characterised in that it further comprises a yoke consisting of two identical halves (17a, 17b) each having an opening (19) in order to receive the adjoining stop flanges (3a, 3b) of two chain half-links (1a, 1b), and in that said yoke comprises means for detachably or undetachably connecting said two halves.

3. Set of elements according to claim 1 or 2, characterised in that it further compises a reversing piece consisting of two identical parts (29a, 29b) each having an oblong opening (33) through which said U-shaped curved portion (2) of said chain half-link (1) is insertable, said two reversing piece parts with said inserted curved portions selectively being connectable in such a manner that the curved portions are in the same plane, or preferably in two perpendicular planes.

4. Set of elements according to claim 1, characterised in that said cross piece (8) consists of a plate (9) in whose centre area a symmetrical cross portion (10) with said cross-shaped cutout (11) is arranged, said cross portion having a smaller thickness than the rest of said plate (8) and being divided on the side facing said stop flange (3) into four segments having walls (12) which obliquely rise from said cutout (11) and whose gradient corresponds to the inclination of the outwardly tapering inner sides (13) of said stop flanges.

5. Set of elements according to claim 3, characterised in that said reversing piece parts (29a, 29b) are formed of base plates (30a, 30b) having symmetrical ground plans, wherein two recesses are arranged perpendicularly to said oblong openings (33) in order to receive the inner surfaces (13) of said stop flanges (3).

6. Set of elements according to claim 2, characterised in that the inner surfaces of said yoke halves (17a, 17b) each have a mutually corresponding shoulder (22a, 22b).

7. Set of elements according to any one of claims 1 to 6, characterised in that said U-shaped curved portion (24) is not closed and forms a hook.

8. Set of elements according to claim 7, characterised in that the gap in said curved portion (24) is capable of being closed by means of a closure (25).

9. Set of elements according to any one of claims 1 to 8, characterised in that the chain links, the cross pieces and reversing pieces as well as the yokes are manufactured from cast aluminum.

## Revendications

1. Ensemble d'éléments pour la fixation et/ou la fabrication d'une chaîne, comprenant des demi-maillons en forme de U (1; 1a,1b; 9) dont les faces frontales comportent des brides d'arrêt (3), caractérisé en ce que la longueur des brides d'arrêt (3) est plus grande que la double épaisseur des pièces recourbées en U (2), et que ledit ensemble comporte une pièce en croix (4, 8, 15) avec une découpure en forme de croix (11) afin d'introduire la pièce recourbée en U soit en position verticale ou horizontale et de fixer le demi-maillon dans cette position.

2. Ensemble d'éléments selon la revendication 1, caractérisé en ce qu'il comporte en plus un joug constitué de deux moitiés (17a, 17b) identiques ayant chacune une ouverture (19) afin de recevoir les brides d'arrêt (3a, 3b) adjacentes de deux demi-maillons (1a, 1b), et que le joug présente des moyens pour relier les deux moitiés de façon détachable ou non détachable.

3. Ensemble d'éléments selon la revendication 1 ou 2, caractérisé en ce qu'il comporte en plus une pièce d'inversion consistant de deux parties (29a, 29b) identiques ayant chacune une ouverture allongée (33) par laquelle la pièce recourbée en U (2) du demi-maillon (1) est enfichable, les deux parties de la pièce d'inversion avec les pièces recourbées en U enfichées pouvant sélectivement être reliées dans le même plan des pièces recourbées ou de préférence dans deux plans perpendiculaires.

4. Ensemble d'éléments selon la revendication 1, caractérisé en ce que la pièce en croix (8) est constituée d'une plaque (9) dans la partie centrale de laquelle est disposée une partie en croix (10) symétrique comportant la découpure en forme de croix (11), ladite partie en croix ayant une épaisseur plus petite que le restant de la plaque (8) et étant répartie, du côté en regard de la bride d'arrêt (3), en quatre segments (3) ayant des parois (12) qui montent obliquement depuis la découpure (11) et dont la pente correspond à l'inclinaison des côtés intérieurs (13) des brides d'arrêt (3) effilées vers l'extérieur.

5. Ensemble d'éléments selon la revendication 3, caractérisé en ce que lesdites parties de la pièce d'inversion (29a, 29b) sont constituées de plaques de base (30a, 30b) à projection horizontale symétrique dans lesquelles sont agencés, perpendiculairement aux ouvertures allongées (33), deux évidements afin de recevoir les surfaces intérieures (13) des brides d'arrêt (3).

6. Ensemble d'éléments selon la revendication 2, caractérisé en ce que les surfaces intérieures des moitiés (17a, 17b) dudit joug présentent chaque fois un épaulement (22a, 22b), ces épaulements se correspondant mutuellement.

7. Ensemble d'éléments selon l'une quelconque des revendications 1 à 6, caractérisé en ce que la pièce recourbée en U (24) n'est pas fermée et forme un crochet.

8. Ensemble d'éléments selon la revendication 7, caractérisée en ce que l'intervalle de la pièce recourbée (24) peut être fermé au moyen d'une fermeture (25).

9. Ensemble d'éléments selon l'une quelconque des revendications 1 à 8, caractérisé en ce que les maillons, les pièces en croix et les pièces d'inversion ainsi que les jougs sont fabriqués en fonte d'aluminium.
